# EUROPEAN PATENT APPLICATION

(11) **EP 4 817 926 A1**
(43) Date of publication of application: **07.10.2026**
(21) Application number: 26160567.9
(22) Date of filing: 25.02.2026
(51) Int. Cl.: B60K 35/81

(54) **VEHICLE DISPLAY DEVICE**

(30) Priority: 31.03.2025 JP 2025058325
(71) Applicant: MAZDA MOTOR CORPORATION, Hiroshima 730-8670 (JP)
(72) Inventor: Tatsuya, Sugiyoshi, Aki-gun, Hiroshima, 730-8670 (JP); Kazuna, Kaneshige, Aki-gun, Hiroshima, 730-8670 (JP)
(74) Representative: Lorenz Seidler Gossel Part. mbB

(57) **Abstract**

[Problem]

A vehicle display device is provided that is capable of displaying many pieces of information and can make operability good.

[Means for Solution]

A vehicle display device includes: a display control unit 102 that displays a bar icon F20, which includes a bar F21 and a pointer F22 moving along the bar F21, in a bar icon display region A202; an apparatus control unit 104 that sets a magnitude of a control parameter based on a position of the pointer F22; and a notification unit 102 that executes notification control to notify, to a user, that an operation is accepted when a touch operation is performed on an operation accepting region A201. When a swipe operation to slidingly move an operation position of the touch operation is performed after the notification control is carried out, pointer moving control is carried out in which regardless of whether or not an operation position of the swipe operation is in a bar icon display region A201, the pointer F22 is moved in accordance with a change in the operation position

## Description

### [Technical Field]

The present invention relates to a display device to be provided in a vehicle.

### [Background Art]

In related art, by providing a display unit which is capable of touch operation, a vehicle-mounted apparatus such as an air-conditioning apparatus has been operated by an operation through the display unit.

For example, Patent Literature 1 discloses a device that includes a display of a touch panel type. In this device, when a user performs a predetermined operation through the display to operate the air-conditioning apparatus, an image displayed on the display is switched to an image for an operation of the air-conditioning apparatus, and only images about the air-conditioning apparatus are displayed on the display. Specifically, this device is configured such that images are displayed which represent magnitudes of control parameters as operation targets such as an airflow amount and a temperature and the magnitudes of the control parameters can be changed by a touch operation on the images.

### [Citation List]

### [Patent Literature]

[Patent Literature 1] Japanese Patent Laid-Open No. 2024-169679

### [Summary of Invention]

### [Problems to be Solved by the Invention]

In a device of Patent Literature 1, because in an operation of an air-conditioning apparatus, an image displayed on the display is switched to an image including only icons about the air-conditioning apparatus, an image which represents a magnitude of a control parameter such as an airflow amount can comparatively largely be displayed on the display. Thus, it can be considered that by this device, a user can perform a demanded operation with the image even while being subjected to shaking of the vehicle and the operability becomes good. However, this configuration has a problem that convenience is low because other information such as a map is not displayed on the display during an operation of the air-conditioning apparatus.

The present invention has been made in consideration of the above-described circumstance, and an object thereof is to provide a vehicle display device that is capable of displaying many pieces of information and can make operability good.

### [Means for Solving the Problems]

For solving the above problem, the present invention provides a vehicle display device being provided in a vehicle, the vehicle display device including: a display unit that is capable of accepting a touch operation by a user; a display control unit that displays a bar icon, which includes a bar for representing a magnitude of a predetermined control parameter of a vehicle-mounted apparatus and a pointer moving along the bar, in a predetermined bar icon display region of the display unit; an apparatus control unit that sets the magnitude of the control parameter based on a position of the pointer with respect to the bar; and a notification unit that executes notification control to notify, to the user, that a touch operation is accepted when the touch operation is performed on a predetermined operation accepting region of the display unit, characterized in that when a swipe operation to slidingly move an operation position of the touch operation is performed after the notification control is carried out, the display control unit carries out pointer moving control in which regardless of whether or not an operation position of the swipe operation is in the bar icon display region, the pointer is moved in accordance with a change in the operation position (claim 1).

In the present invention, the pointer can be moved even when the operation position of the swipe operation comes off from the bar icon display region, and the user does not have to perform a pointer moving operation in a limited region which is the bar icon display region. Thus, an area of the bar icon display region is reduced to a small size, an area for displaying other information is secured, and while convenience is thereby enhanced, operability in moving the pointer can be made good. Furthermore, in the present embodiment, the notification control is carried out before the pointer moving control. Thus, the user can be caused to recognize that the pointer can be moved when the swipe operation is performed after a notification. Consequently, the user can be encouraged to perform an operation with high operability, and a good operation feeling can certainly be provided to the user.

The swipe operation is an operation in which an operation position of the touch operation is slidingly moved and is an operation in which the finger is moved while the finger is in contact with the screen of the display unit. The apparatus control unit is capable of controlling the control parameter and transmits a control signal for changing the control parameter to the vehicle-mounted apparatus.

In the above configuration, the display control unit preferably carries out the notification control to notify, to the user, that a touch operation is performed, by displaying the bar and the pointer in the bar icon display region, when the touch operation is performed on the operation accepting region (claim 2).

In this configuration, the user can be caused to intuitively recognize that the pointer can be moved when the swipe operation is performed.

In the above configuration, the display control unit preferably displays a main icon, which represents a kind of the control parameter, in the operation accepting region, and the bar icon display region is preferably set in a region which does not overlap the operation accepting region (claim 3).

In this configuration, because the icon representing the control parameter is displayed while the notification control and the pointer moving control are being carried out, the user can be caused to recognize the kind of the control parameter for which the user himself/herself performs an operation.

In the above configuration, the display control unit preferably carries out the pointer moving control when a condition is satisfied that a touch operation in the operation accepting region and a swipe operation at a time after the notification control is carried out are consecutively performed (claim 4).

In this configuration, the user can move the pointer by a simple operation in which the swipe operation is performed with a position in the operation accepting region being used as a base point.

In the above configuration, the display control unit preferably carries out the pointer moving control when a condition is satisfied that the touch operation in the operation accepting region and the swipe operation at a time after the notification control is carried out are not consecutively performed and a swipe operation with a position in the bar icon display region being used as a base point is performed after the notification control is carried out (claim 5).

In this configuration, even in a case where the touch operation is interrupted after the touch operation in the operation accepting region, when the swipe operation with the position in the bar icon display region being used as the base point is thereafter performed, the pointer moving control is carried out. Thus, the user does not have to redo an operation from the touch operation in the operation accepting region in order to carry out the pointer moving control, and convenience is improved.

In the above configuration, when the pointer moving control is carried out, the display control unit preferably decides a moving amount of the pointer based only on a change amount of the operation position of the swipe operation in a predetermined operation effective direction (claim 6).

In this configuration, a situation can be avoided where movement of the pointer is influenced by a change in the operation position in a different direction from the operation effective direction, the change occurring accompanying shaking or the like of the vehicle and being not intended by the user. Thus, the pointer can more certainly be moved in accordance with an intention of the user.

In the above configuration, the bar preferably exhibits a shape extending along the predetermined operation effective direction, and the display control unit preferably moves the pointer along the predetermined operation effective direction (claim 7).

In this configuration, a changing direction of the operation position, which decides the moving amount of the pointer, agrees with a moving direction of the pointer. Thus, the user can intuitively perform an operation for moving the pointer.

In the above configuration, the bar preferably exhibits a shape extending in a predetermined direction, and when the pointer moving control is carried out, the display control unit preferably makes ineffective the swipe operation for moving the pointer to one side, the swipe operation being carried out in a state where the pointer reaches an end portion on the one side in a longitudinal direction of the bar (claim 8).

In this configuration, the pointer can more appropriately be displayed at a position along the bar.

In the above configuration, the vehicle-mounted apparatus is preferably an air-conditioning apparatus, and the control parameter is preferably at least one of a flow amount and a temperature of a wind to be supplied into a vehicle cabin by the air-conditioning apparatus (claim 9).

In this configuration, while an area for displaying information other than an airflow amount or the temperature of the air-conditioning apparatus is secured in the display unit, operability of an airflow amount operation or a temperature operation for the air-conditioning apparatus can be made good.

In the above configuration, the vehicle-mounted apparatus is preferably an acoustic apparatus, and the control parameter is preferably a sound volume of a sound to be produced by the acoustic apparatus (claim 10).

In this configuration, while an area for displaying information other than the sound volume of the acoustic apparatus is secured in the display unit, operability of a sound volume operation for the acoustic apparatus can be made good.

In the above configuration, the notification control is preferably carried out when a duration time of the touch operation performed on the operation accepting region is equal to or longer than a predetermined determination time (claim 11).

In this configuration, an operation for initiating the pointer moving control is clearly distinguished from a short touch operation such as a tap, which prevents unintentional activation and improves operational reliability.

In the above configuration, the predetermined operation effective direction is preferably a left-right direction of the display unit (claim 12).

In this configuration, the operation direction can align with the layout of the bar, allowing the user to perform the swipe gesture intuitively and reducing the cognitive load, which is particularly beneficial for safety while driving.

In the above configuration, the display control unit preferably cancels the display of the bar icon when a period in which no touch operation is performed on the bar icon display region is equal to or longer than a predetermined finish determination period (claim 13).

In this configuration, the display automatically returns to its previous state without requiring an explicit closing operation from the user, which frees up screen area for other information and enhances convenience.

In the above configuration, the notification unit preferably executes the notification control by producing a sound or by transmitting vibration to the user (claim 14).

In this configuration, the user receives non-visual feedback confirming that the operation was accepted, which allows the user to keep their eyes on the road and thereby improves driving safety.

The present invention is also directed to a vehicle including the vehicle display device according to any of the above mentioned configuration. The vehicle further comprises at least one vehicle-mounted apparatus which can be controlled via the vehicle display device.

### [Advantageous Effects of Invention]

As described above, the present invention can provide a vehicle display device that is capable of displaying many pieces of information and can make operability good.

### [Brief Description of Drawings]

FIG. 1 is an outline diagram illustrating a periphery of a driver's seat of a vehicle on which a vehicle display device according to an embodiment of the present invention is mounted.
FIG. 2 is a block diagram illustrating a control system of the vehicle display device.
FIG. 3 is an outline diagram illustrating a display example of a screen of a display.
FIG. 4 is a flowchart for explaining control to be carried out by a control unit.
FIG. 5 is a flowchart for explaining the control to be carried out by the control unit.
FIG. 6 is a flowchart for explaining the control to be carried out by the control unit.
FIG. 7 is a diagram illustrating an operation accepting region which corresponds to a second air-conditioning temperature icon.
FIG. 8 is a diagram illustrating a bar icon which corresponds to the second air-conditioning temperature icon.
FIG. 9 is a diagram illustrating one example of a display screen in an operation of the second air-conditioning temperature icon.
FIG. 10 is a diagram illustrating another example of the display screen in the operation of the second air-conditioning temperature icon.
FIG. 11 illustrates partially enlarged diagrams of the display screen, in which FIG. 11(a) is a diagram illustrating an operation accepting region which corresponds to an air-conditioning airflow amount icon and FIG. 11(b) is a diagram illustrating a bar icon which corresponds to the air-conditioning airflow amount icon.
FIG. 12 illustrates partially enlarged diagrams of the display screen, in which FIG. 12(a) is a diagram illustrating an operation accepting region which corresponds to a sound volume icon and FIG. 12(b) is a diagram illustrating a bar icon which corresponds to the sound volume icon.

### [Mode for Carrying Out the Invention]

One preferable embodiment of the present invention will hereinafter be described with reference to drawings.

### (General Configuration)

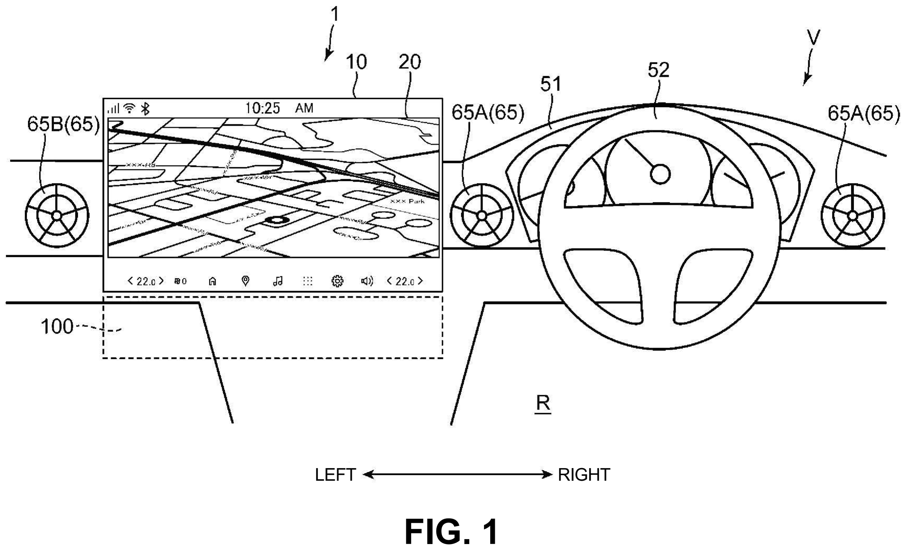

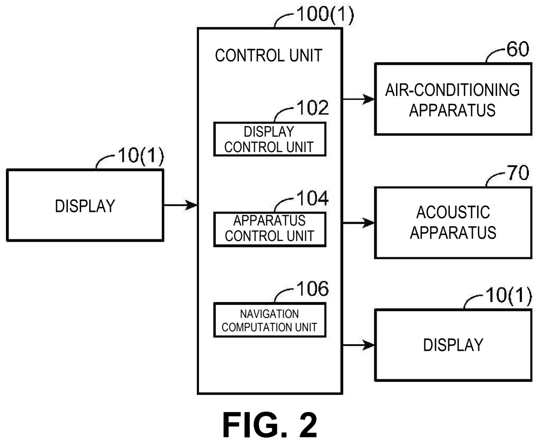

FIG. 1 is an outline diagram illustrating a periphery of a driver's seat of a vehicle V on which a vehicle display device 1 according to the embodiment of the present invention is mounted. FIG. 2 is a block diagram illustrating a control system of the vehicle display device 1. In the following, descriptions will be made while a front-rear direction of the vehicle V will be simply referred to as the front-rear direction and a left-right direction of the vehicle V, that is, the left-right direction in a state where the vehicle V is directed forward will simply be referred to as the left-right direction. Directions indicated in each of the drawings are directions which are defined as described above.

The vehicle display device 1 has a display 10 and a control unit 100 which controls the display 10 and vehicle-mounted apparatuses. The display 10 corresponds to a "display unit" of the present invention.

The display 10 displays various kinds of information and accepts an operation by a user. The display 10 performs various displays while emitting light. In the present embodiment, the display 10 is formed with an organic EL panel. Note that a light emitting type of the display 10 is not limited to an organic EL type, and the display 10 may be configured with a liquid crystal panel, a plasma panel, or the like. The display 10 is a so-called touch panel and accepts a touch operation by the user. In the present embodiment, the display 10 is formed with a touch panel of a pressure sensitive type. Note that an input type of the display 10 is not limited to the pressure sensitive type, and the display 10 may be configured with an electrostatic capacitance type panel or the like.

The above touch operation that the display 10 accepts is an operation in which a finger, a stylus, or the like is brought into contact with the display 10 and a point (position) on a screen 20 of the display 10 is thereby designated. Note that in a case where the electrostatic capacitance type panel or the like is used for the display 10 and the display 10 is formed with a touch panel of a non-contact type, an operation of causing the finger, the stylus, or the like to approach the display 10 is also included in the above touch operation. In the following, while tools for performing the touch operation such as the finger and the stylus are represented by the finger, a description will be made on the assumption that the touch operation is performed by the finger.

In the present embodiment, the above touch operation includes at least a tap operation, a double-tap operation, a long press operation, and a swipe operation, and the control unit 100 accepts each of those operations as a different operation. The control unit 100 specifies which of the above operations an input touch operation is in accordance with a contact time and a contact interval between the finger and the display 10. Note that the tap operation is an operation in which the finger is brought into contact with the screen 20 of the display 10 only for a short time. The double-tap operation is an operation in which the tap operation is repeated twice in a short period. The long press operation is a so-called long push operation and is an operation in which the finger is caused to contact with the same point on the screen 20 for a longer time than that of the tap operation. The swipe operation is an operation in which an operation position of the touch operation is slidingly moved and is an operation in which the finger is moved while the finger is in contact with the screen 20.

The display 10 is provided in a position in which a driver seated on the driver's seat is capable of operations. In the present embodiment, the driver's seat is provided in a position in which in a state where the driver holds a steering wheel 52 by one hand, the driver can operate the display 10 by the other hand. Specifically, the display 10 is provided at a general center, in a vehicle width direction, of an instrument panel 51 which is provided in a front portion of a vehicle cabin R.

The control unit 100 includes a microprocessor formed with known CPU, ROM, RAM, and so forth. The control unit 100 functionally includes a display control unit 102, an apparatus control unit 104, and a navigation computation unit 106.

The control unit 100 (display control unit 102) controls a display content and a display format of the display 10 based on an operation or the like performed for the display 10.

The control unit 100 (apparatus control unit 104) controls a vehicle-mounted apparatus based on an operation performed for the display 10. In the present embodiment, an air-conditioning apparatus 60 and an acoustic apparatus 70 which are mounted on the vehicle V are electrically connected to the control unit 100, as the vehicle-mounted apparatuses to be controlled by the control unit 100.

The air-conditioning apparatus 60 includes a heat exchanger or the like, heats or cools air by heat exchange or the like by the heat exchanger, and supplies the air into the vehicle cabin R. In the vehicle V, a plurality of blowing ports 65 are provided in the instrument panel 51 or the like, and the air-conditioning apparatus 60 supplies a wind into the vehicle cabin R through those blowing ports 65. In the present embodiment, the vehicle V has the driver's seat and a passenger seat and has, as the blowing ports 65, driver's seat side blowing ports 65A which are provided on the driver's seat side and supplies wind mainly to the driver's seat and a passenger seat side blowing port 65B which is provided on the passenger seat side and supplies a wind mainly to the passenger seat. A part of blowing ports 65 are provided in the instrument panel 51.

The air-conditioning apparatus 60 is capable of changing a flow amount of the wind to be supplied into the vehicle cabin R and a temperature of the wind. The air-conditioning apparatus 60 is capable of individually changing the temperature of the wind which flows into the vehicle cabin R via the driver's seat side blowing ports 65A and the temperature of the wind which flows into the vehicle cabin R via the passenger seat side blowing port 65B. On the other hand, the air-conditioning apparatus 60 integrally changes the flow amount of the wind which is output toward the blowing ports 65A and 65B. Note that the user changes opening degrees of shutters which are respectively provided in the blowing ports 65A and 65B and can thereby adjusts the flow amount of the wind which flows into the vehicle cabin R through the blowing ports 65A and 65B. In the following, appropriately, the temperature of the wind to be supplied into the vehicle cabin R by the air-conditioning apparatus 60 will be referred to as an air-conditioning temperature, and the temperature of the wind which passes through the driver's seat side blowing port 65A will be referred to as a first air-conditioning temperature, and the temperature of the wind which passes through the passenger seat side blowing port 65B will be referred to as a second air-conditioning temperature. Further, in the following, appropriately, the flow amount of the wind to be supplied into the vehicle cabin R by the air-conditioning apparatus 60 will be referred to as an air-conditioning airflow amount.

The control unit 100 (apparatus control unit 104) is capable of controlling the air-conditioning temperature and the air-conditioning airflow amount and transmits a control signal for changing those to the air-conditioning apparatus 60.

The acoustic apparatus 70 includes a head unit, an amplifier, speakers, and so forth. The acoustic apparatus 70 amplifies, by the amplifier, a sound signal that the head unit generates accompanying reproduction or the like of a sound source and outputs that from the speakers. The speaker is incorporated in an inner wall or the like of the vehicle cabin R so as to output a sound toward an inside of the vehicle cabin R. The acoustic apparatus 70 is capable of changing sound pressure, that is, a sound volume of the sound output from the speaker. In the following, the sound volume of the speaker of the acoustic apparatus 70 will appropriately be referred to as a speaker sound volume.

The control unit 100 (apparatus control unit 104) transmits, to the acoustic apparatus 70, a control signal which is capable of controlling kinds of sound sources to be reproduced by the acoustic apparatus 70 and the speaker sound volume and is for changing those.

In the present embodiment, the vehicle display device 1 configures a navigation system. The control unit 100 (navigation computation unit 106) performs various kinds of computation about navigation. For example, the control unit 100 (navigation computation unit 106) performs specification of a present position of the vehicle V, computation about a route to a destination which is set by an operation through the display 10, and so forth. The display 10 displays, on the display 10, the specified present position of the vehicle V, the route to the destination, and so forth together with a map or the like. In other words, in the present embodiment, functions to operate the air-conditioning apparatus 60 and the acoustic apparatus 70 are added to the navigation system mounted on the vehicle V.

In the present embodiment, the control unit 100 is configured to be capable of wireless LAN communication and wireless communication with a base station in a periphery.

### (Image on Display)

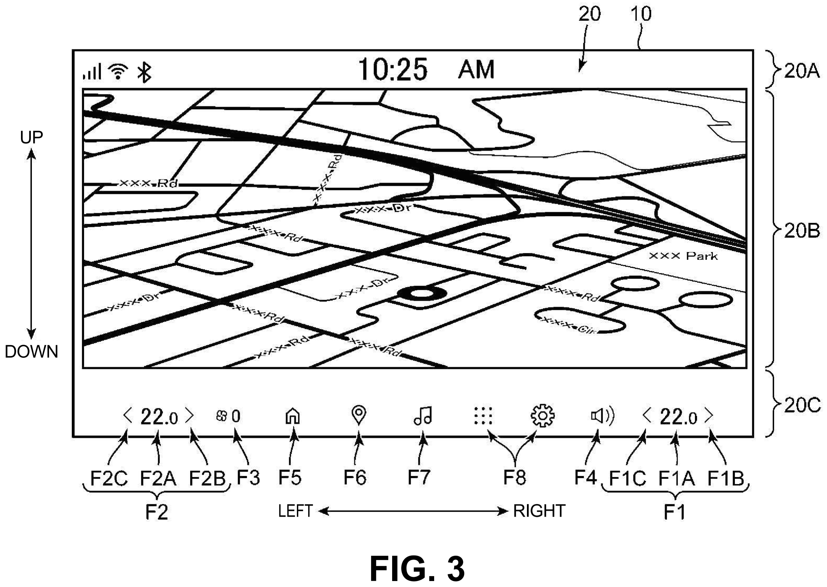

Next, a description will be made about an image to be displayed on the screen 20 of the display 10. Appropriately, the screen 20 of the display 10 will simply be referred to as a display screen 20. FIG. 3 is a diagram illustrating one example of an image to be displayed on the display screen 20. In the following, the display screen 20 is divided roughly into three display regions. Specifically, the display screen 20 is divided into a first display region 20A which configures an upper end portion of the display screen 20, a third display region 20C which configures a lower end portion of the display screen 20, and a second display region 20B between those.

In the first display region 20A, information such as time, a temperature, and a communication condition between the control unit 100 and an outside, the information being basically incapable of being operated by the user, is displayed. The second display region 20B is a region which occupies a large part of the display screen 20, and in that, the map, the kind of the sound source which is being reproduced, and so forth are displayed. In the third display region 20C, a plurality of function icons F1 to F8 are displayed. Those function icons F1 to F8 each function as operation elements for operating the display 10, the air-conditioning apparatus 60, the acoustic apparatus 70, and so forth. In the present embodiment, in the third display region 20C of the display screen 20, those function icons F1 to F8 are always displayed. In the present embodiment, a region in which each icon (symbol) of the function icons F1 to F8 is indicated, the region including the icon and having almost the same dimension in the left-right direction as a dimension of one index finger of an adult male American person (AM50) of a standard body shape, functions as an operation element which accepts the touch operation and so forth. Note that in a case where a plurality of icons (symbols) are included in one function icon, as for each of the icons, a region, which includes the icon and has almost the same dimension in the left-right direction as the dimension of one index finger of an adult male American person (AM50) of the standard body shape, functions as an operation element which accepts the touch operation and so forth.

The function icons include a first air-conditioning temperature icon F1, a second air-conditioning temperature icon F2, an air-conditioning airflow amount icon F3, and a sound volume icon F4. Each of those icons F1 to F4 functions as an operation element for operating the vehicle-mounted apparatus and changing a magnitude of its control parameter and represents a kind of the corresponding control parameter. Specifically, the first air-conditioning temperature icon F1 represents the first air-conditioning temperature and functions as the operation element for operating the air-conditioning apparatus 60 and changing the first air-conditioning temperature. The second air-conditioning temperature icon F2 represents the second air-conditioning temperature and functions as the operation element for operating the air-conditioning apparatus 60 and changing the second air-conditioning temperature. The air-conditioning airflow amount icon F3 represents the air-conditioning airflow amount and functions as the operation element for operating the air-conditioning apparatus 60 and changing the air-conditioning airflow amount. The sound volume icon F4 represents the speaker sound volume and functions as the operation element for operating the acoustic apparatus 70 and changing the speaker sound volume. Those first air-conditioning temperature icon F1, second air-conditioning temperature icon F2, air-conditioning airflow amount icon F3, and sound volume icon F4 correspond to "main icons" of the present invention.

The two air-conditioning temperature icons F1 and F2 respectively include set temperature display icons F1A and F2A which indicate present set values of the first air-conditioning temperature and the second air-conditioning temperature, temperature raising icons F1B and F2B which are positioned on right sides relative to the set temperature display icons F1A and F2A and function as the operation elements for increasing the air-conditioning temperatures, and temperature lowering icons F1C and F2C which are positioned on left sides relative to the set temperature display icons F1A and F2A and function as the operation elements for lowering the air-conditioning temperatures.

The function icons include a home icon F5 for displaying a home image which is set in advance in the second display region 20B, a navigation icon F6 for displaying the map or the like in the second display region 20B and for enabling an input of the destination or the like, and an audio icon F7 for displaying the kind of the sound source or the like, which is being reproduced, in the second display region 20B and for enabling an operation (except the speaker sound volume) of the acoustic apparatus 70. Further, the function icons include two setting icons F8 for performing various settings of the display 10 and so forth.

### (Control Contents of Control Unit)

Next, a description will be made about control, as features of the present invention, which is carried out by the control unit 100 when the first air-conditioning temperature icon F1, the second air-conditioning temperature icon F2, the air-conditioning airflow amount icon F3, and the sound volume icon F4 are operated.

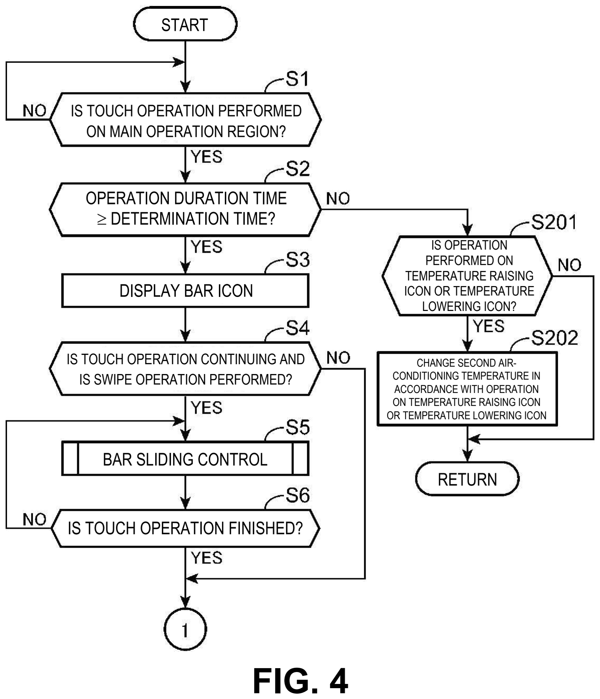

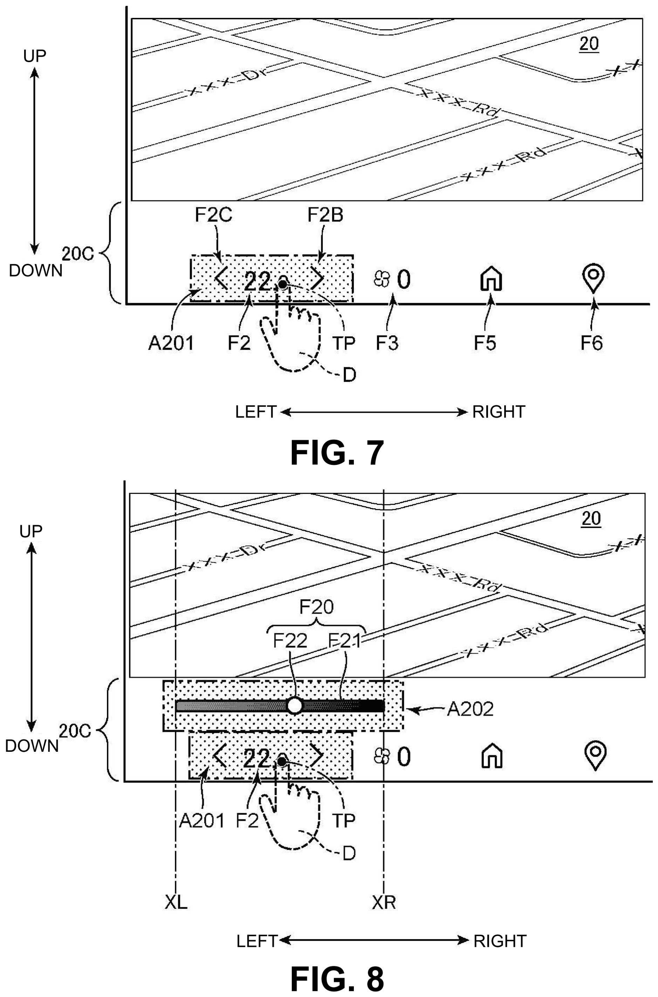

First, representing the above four icons F1 to F4, control in a case where the second air-conditioning temperature icon F2 is operated will be described using flowcharts in FIG. 4 to FIG. 6, FIG. 7, and FIG. 8. Each of FIG. 7 and FIG. 8 illustrates diagrams in which a part of the display screen 20 is enlarged. Note that in FIG. 7 and so forth, a reference character D represents a hand of the user (person) so as to indicate an operation condition by the user but is represented to be smaller than a size of an actual hand of a person in order to reduce overlaps with other illustrations.

The control unit 100 determines whether or not the touch operation is performed on an operation accepting region A201 for the second air-conditioning temperature in the third display region 20C (step S1). As illustrated in FIG. 7, in the present embodiment, the operation accepting region A201 for the second air-conditioning temperature exhibits a generally rectangular shape. The operation accepting region A201 for the second air-conditioning temperature is set in the vicinity of a region in which the second air-conditioning temperature icon F2 is displayed.

In the present embodiment, in the left-right direction, a region which is wider, to each of left and right outer sides and by almost the same dimension as a dimension 0.5 times the index finger of an adult male American person (AM50) of the standard body shape, than a region in which the second air-conditioning temperature icon F2 functions as the operation element (a region in which the touch operation or the like is accepted as an operation performed for the second air-conditioning temperature icon F2) is set as the operation accepting region A201 for the second air-conditioning temperature. In detail, the second air-conditioning temperature icon F2 includes three icons of the set temperature display icon F2A, the temperature raising icon F2B, and the temperature lowering icon F2C, that is, three symbols, and the region in which the second air-conditioning temperature icon F2 functions as the operation element corresponds to a dimension of three index fingers of the above adult male person. On the other hand, the operation accepting region A201 for the second air-conditioning temperature is set as a region from a position on the right side, by the dimension 0.5 times the above index finger, relative to the region in which the second air-conditioning temperature icon F2 functions as the operation element to a position on the left side, by the dimension 0.5 times the above index finger, relative to the region in which the second air-conditioning temperature icon F2 functions as the operation element. Note that in an illustration example, in the left-right direction, a region from an intermediate position between a right end of the second air-conditioning temperature icon F2 and a left end of the air-conditioning airflow amount icon F3 to a position slightly on the left side relative to a left end of the second air-conditioning temperature icon F2 is provided as the operation accepting region A201 for the second air-conditioning temperature. Further, in the up-down direction, a region from a position which is around a lower end of the third display region 20C and is lower than a lower end of the second air-conditioning temperature icon F2 to an intermediate position between an upper end of the second air-conditioning temperature icon F2 and a lower end of the second display region 20B is set as the operation accepting region A201 for the second air-conditioning temperature.

Returning to FIG. 4, in a case where a determination in step S1 is NO and no touch operation is performed on the operation accepting region A201 for the second air-conditioning temperature, the control unit 100 repeats step S1. That is, step S2 and subsequent steps are carried out in a case where the touch operation is performed on the operation accepting region A201 for the second air-conditioning temperature.

In a case where the determination in step S1 is YES and the touch operation is performed on the operation accepting region A201 for the second air-conditioning temperature, the control unit 100 determines whether or not a duration time of the touch operation performed in the operation accepting region A201 for the second air-conditioning temperature is equal to or longer than a predetermined determination time (step S2). In a case where this determination is NO and the duration time of the touch operation performed on the operation accepting region A201 for the second air-conditioning temperature is shorter than the determination time, the control unit 100 progresses to step S201. The above determination time is set in advance and is stored in the control unit 100. Note that the determination time is set to almost the same time as an operation time of the tap operation.

In step S201, the control unit 100 determines whether or not the tap operation is performed on the temperature raising icon F2B or the temperature lowering icon F2C of the second air-conditioning temperature icon F2. In a case where a determination in step S201 is YES, the control unit 100 changes the second air-conditioning temperature in accordance with an operation on those icons F2B and F2C (step S202). Specifically, in a case where the tap operation is performed on the temperature raising icon F2B, the control unit 100 gives a command to the air-conditioning apparatus 60 such that the second air-conditioning temperature rises only by a unit temperature. Further, in a case where the tap operation is performed on the temperature lowering icon F2C, the control unit 100 gives a command to the air-conditioning apparatus 60 such that the second air-conditioning temperature lowers only by the unit temperature. Note that the unit temperature is set in advance and is stored in the control unit 100. After step S202 or in a case where the determination in step S201 is NO, the control unit 100 finishes a process (returns to step S1).

On the other hand, in a case where the determination in step S2 is YES and the duration time of the touch operation performed on the operation accepting region A201 for the second air-conditioning temperature is equal to or longer than the determination time, the control unit 100 displays a bar icon F20 for the second air-conditioning temperature in a bar icon display region A202 for the second air-conditioning temperature (step S3). By display of the bar icon F20, the user can recognize that the above touch operation (the touch operation which continues for the determination time or longer) is accepted by the control unit 100. This control for displaying the bar icon F20 corresponds to "notification control" of the present invention. Further, the control unit 100 (display control unit 102) which carries out this control functions as a "notification unit" of the present invention.

The bar icon F20 for the second air-conditioning temperature includes a bar F21 for representing a magnitude of the second air-conditioning temperature and a pointer F22 which moves along the bar F21. In the present embodiment, the bar F21 exhibits a rod shape extending in the left-right direction. The pointer F22 exhibits a generally circular shape whose diameter is approximately the same as a dimension of the bar F21 in the up-down direction and is sufficiently smaller than a dimension of the bar F21 in the left-right direction. The pointer F22 is displayed on the bar F21 and is displayed so as to move on the bar F21 in the left-right direction. Here, as described above, in the present embodiment, a longitudinal direction of the bar F21 agrees with the left-right direction, a moving amount of the pointer F22 is decided based on a change amount of the pointer F22 in the left-right direction as described later, and the left-right direction corresponds to an "operation effective direction" of the present invention.

The bar icon display region A202 for the second air-conditioning temperature is set in the third display region 20C. In the present embodiment, as illustrated in FIG. 8, the bar icon display region A202 for the second air-conditioning temperature exhibits a generally rectangular shape. The bar icon display region A202 for the second air-conditioning temperature is set in a region which is above the operation accepting region A201 for the second air-conditioning temperature and does not overlap that. In an example in FIG. 8, in the up-down direction, the bar icon display region A202 for the second air-conditioning temperature is adjacent to the operation accepting region A201 for the second air-conditioning temperature. A dimension in the left-right direction and an area of the bar icon display region A202 for the second air-conditioning temperature are respectively larger than a dimension and an area of the operation accepting region A201 for the second air-conditioning temperature.

In the present embodiment, the bar icon F20 is displayed such that in the left-right direction, an operation start position of the touch operation which triggers display of the bar icon F20 for the second air-conditioning temperature, in other words, a contact start position TP between a finger of the user and the display 10 agrees with a central position of the bar F21 in the left-right direction. Further, in the up-down direction, the bar icon F20 is displayed around a center of the bar icon display region A202 for the second air-conditioning temperature. Further, in the left-right direction, the bar icon F20 is displayed in a position which is spaced apart inward from both edges of the bar icon display region A202 for the second air-conditioning temperature.

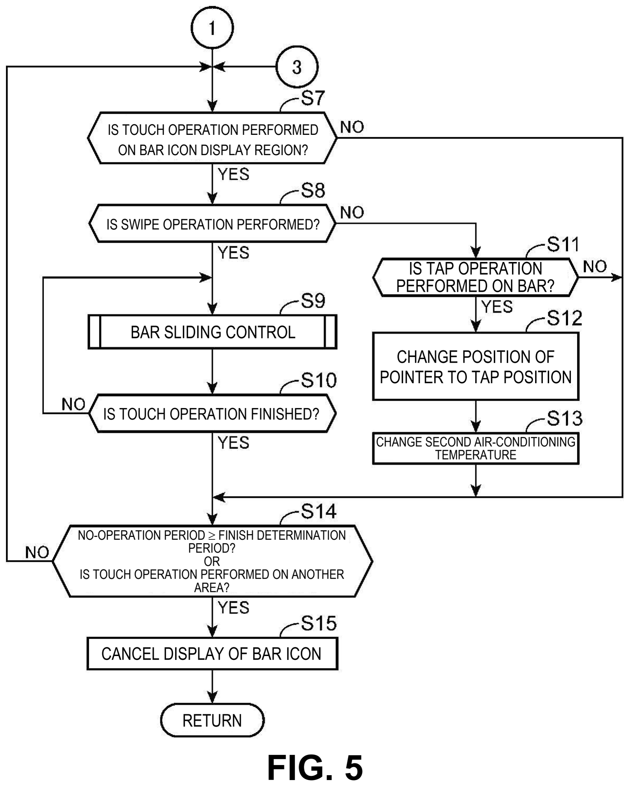

Returning to the flowchart in FIG. 4, after step S3, the control unit 100 determines whether or not a condition is satisfied that the touch operation is continuing and the swipe operation with a point (position) in the operation accepting region A201 for the second air-conditioning temperature being used as a base point is performed (step S4). That is, this condition is a condition that consecutively to the touch operation for displaying the bar icon F20, the swipe operation with the point in the operation accepting region A201 for the second air-conditioning temperature being used as the base point is performed. This condition is satisfied in a case where the user continuously causes the finger to contact with the operation accepting region A201 for the second air-conditioning temperature before and after display of the bar icon F20 and performs the swipe operation without detaching the finger arranged on the operation accepting region A201 from the display 10 after display of the bar icon F20. In a case where a determination in step S4 is NO and the above condition is not satisfied, the control unit 100 progresses to step S7 in FIG. 5.

On the other hand, in a case where the determination in step S4 is YES and the above condition is satisfied, the control unit 100 carries out bar sliding control (step S5). The bar sliding control is continuously carried out until the touch operation is finished (until a determination in step S6 becomes YES), that is, until the user detaches the finger from the display 10. The bar sliding control will be described later. In a case where the user detaches the finger from the display 10 and the touch operation is finished (in a case where the determination in step S6 becomes YES), the bar sliding control is finished, and the control unit 100 progresses to step S7.

In step S7, the control unit 100 determines whether or not the touch operation is performed on the bar icon display region A202 for the second air-conditioning temperature. That is, the control unit 100 determines whether or not the touch operation which has once been finished is again carried out and its operation position is in the bar icon display region A202. In a case where a determination in step S7 is NO and no touch operation is performed on the bar icon display region A202 for the second air-conditioning temperature, the control unit 100 progresses to step S14.

On the other hand, in a case where the determination in step S7 is YES and the touch operation is performed on the bar icon display region A202 for the second air-conditioning temperature, the control unit 100 determines whether or not the performed touch operation is the swipe operation with a position in the bar icon display region A202 being used as a base point (step S8). That is, it is determined whether or not the user causes the finger to contact with the bar icon display region A202 and thereafter slidingly moves the finger without detaching the finger from the display 10. In a case where this determination is YES, similarly to steps S5 and S6, the control unit 100 continuously carries out the bar sliding control until the touch operation is finished (until a determination in step S10 becomes YES), that is, until the user detaches the finger from the display 10 (step S9). On the other hand, when the user detaches the finger from the display 10 and the touch operation is finished (when the determination in step S10 becomes YES), the control unit 100 progresses to step S14.

Returning to step S8, in a case where the determination in step S8 is NO and the performed touch operation is not the swipe operation, the control unit 100 determines whether or not the tap operation is performed on the bar F21 (step S11). In a case where a determination in step S11 is NO, the control unit 100 progresses to step S14. On the other hand, in a case where the determination in step S11 is YES, the control unit 100 changes a display position of the pointer F22 to a position at which the tap operation is performed (step S12). Further, the control unit 100 changes the second air-conditioning temperature in accordance with the position of the pointer F22 on the bar F21 (step S13). Specifically, the control unit 100 calculates, as a set value, a value that results from addition of a value, which results from multiplication of a separation distance between the position of the pointer F22 and the left end position XL (FIG. 8) of the bar F21 by a predetermined value, to a lowest temperature corresponding to a left end position XL of the bar F21 and gives a command to the air-conditioning apparatus 60 such that the second air-conditioning temperature becomes the set value. After step S13, the control unit 100 progresses to step S14.

In step S14, the control unit 100 determines whether or not a finishing condition is satisfied that a period in which the touch operation is not performed on the bar icon display region A202 for the second air-conditioning temperature is equal to or longer than a predetermined finish determination period or the touch operation is performed on another region except the bar icon display region A202 for the second air-conditioning temperature. The finish determination period is set in advance and is stored in the control unit 100. In a case where a determination in step S14 is NO and the finishing condition is not satisfied, the control unit 100 returns to step S7. On the other hand, in a case where the determination in step S14 is YES and the finishing condition is satisfied, the control unit 100 cancels display of the bar icon F20 (step S15). Accordingly, a changing control of the second air-conditioning temperature according to an operation on the second air-conditioning temperature icon F2 is finished.

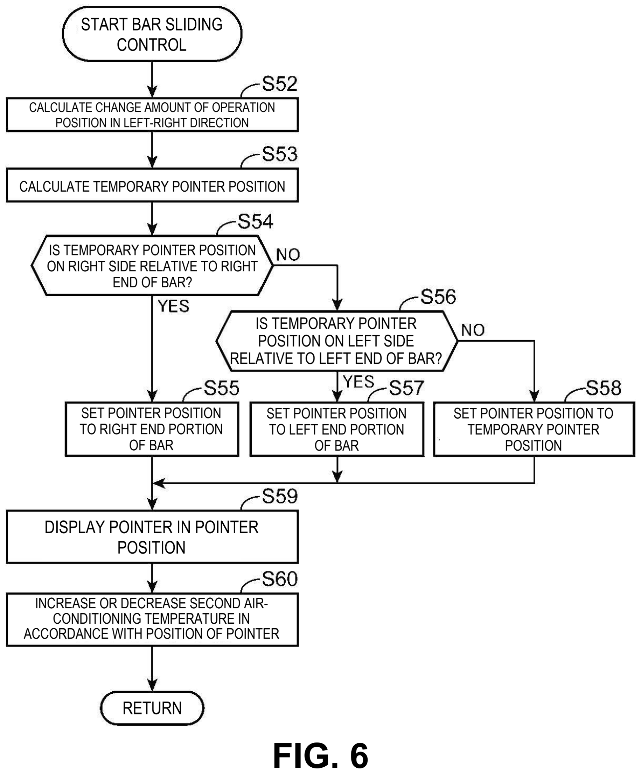

Next, by using the flowchart in FIG. 6, a description will be made about details of the bar sliding control to be carried out in step S5 and step S9.

When the bar sliding control is started, the control unit 100 first calculates a change amount, in the left-right direction, of an operation position, that is, a contact position between the finger of the user and the display 10 (step S52). Next, the control unit 100 calculates a temporary pointer position, which is a temporary position of the pointer F22, based on a moving direction of the operation position in the left-right direction, the change amount of the operation position which is calculated in step S52, and the position of the pointer F22 at a start of the swipe operation (step S53). Specifically, in a case where the operation position is moved in a right direction only by a predetermined moving amount, the temporary pointer position is calculated as a position which is deviated from the position of the pointer F22 at the start of the swipe operation in the right direction by the above predetermined moving amount. On the other hand, in a case where the operation position is moved in a left direction only by a predetermined moving amount, the temporary pointer position is calculated as a position which is deviated from the position of the pointer F22 at the start of the swipe operation in the left direction by the above predetermined moving amount.

Next, the control unit 100 determines whether or not the temporary pointer position is on a right side relative to a position XR (FIG. 8) of a right end of the bar F21 (step S54). In a case where this determination is YES and the temporary pointer position is on the right side relative to the position XR of the right end of the bar F21, the control unit 100 sets a pointer position to a right end portion of the bar F21 (step S55). On the other hand, in a case where the determination in step S54 is NO, the control unit 100 next determines whether or not the temporary pointer position is on a left side relative to the position XL (FIG. 8) of a left end of the bar F21 (step S56). In a case where this determination is YES and the temporary pointer position is on the left side relative to the position XL of the left end of the bar F21, the control unit 100 sets the pointer position to a left end portion of the bar F21 (step S57). On the other hand, in a case where the determination in step S56 is NO and the temporary pointer position is between the right end position XR and the left end position XL of the bar F21 in the left-right direction, the control unit 100 sets the pointer position to the temporary pointer position (step S58). In such a manner, in the left-right direction, the control unit 100 limits the pointer position to a region between the left end XL and the right end XR of the bar F21.

After step S55, step S57, or step S58, the control unit 100 moves the pointer F22 (display of the pointer F22) to the set temporary pointer position (step S59). Further, the control unit 100 changes the second air-conditioning temperature in accordance with the position of the pointer F22 on the bar F21 (step S60). A specific changing procedure of the second air-conditioning temperature according to the position of the pointer F22 on the bar F21 is the same as that in step S13. After step S60, the control unit 100 progresses to step S6 or step S10.

In the above bar sliding control, control including steps S52 to S59 corresponds to "pointer moving control" of the present invention.

In such a manner, when the touch operation is continuously performed on the operation accepting region A201 for the second air-conditioning temperature for the determination time or longer, the bar icon F20 for the second air-conditioning temperature is displayed in the third display region 20C of the display screen 20. Then, when consecutively to the above touch operation, the swipe operation is performed after display of the bar icon F20 for the second air-conditioning temperature, the bar sliding control is started, the position of the pointer F22 is changed on the bar F21 accompanying movement of the operation position in the left-right direction, and the second air-conditioning temperature is changed in accordance with the position of the pointer F22. Further, in the left-right direction, the position of the pointer F22 is limited to a portion between both of the left and right ends of the bar F21. That is, in the left-right direction, in a case where the pointer F22 reaches one end of the bar F21, even when the operation position of the swipe operation changes to one side, this operation is regarded as ineffective about movement of the pointer F22. Further, in a state where the bar icon F20 is displayed on the display 10, even in a case where the user once detaches the finger from the display 10, when the swipe operation with a point in the bar icon display region A202 being used as the base point is performed, the above bar sliding control is started, and the position of the pointer F22 and the second air-conditioning temperature are changed accompanying movement of the operation position.

Here, when the bar sliding control is started, the bar sliding control is continued until the touch operation is discontinued (until the determination in step S6 or S10 becomes YES). Accordingly, even when on the way of the swipe operation, the operation position comes off from the operation accepting region A201 and bar icon display region A202 for the second air-conditioning temperature, the bar sliding control is continued. Note that at a time point when the bar sliding control is started, the position of the touch operation is in the operation accepting region A201 or the bar icon display region A202 for the second air-conditioning temperature.

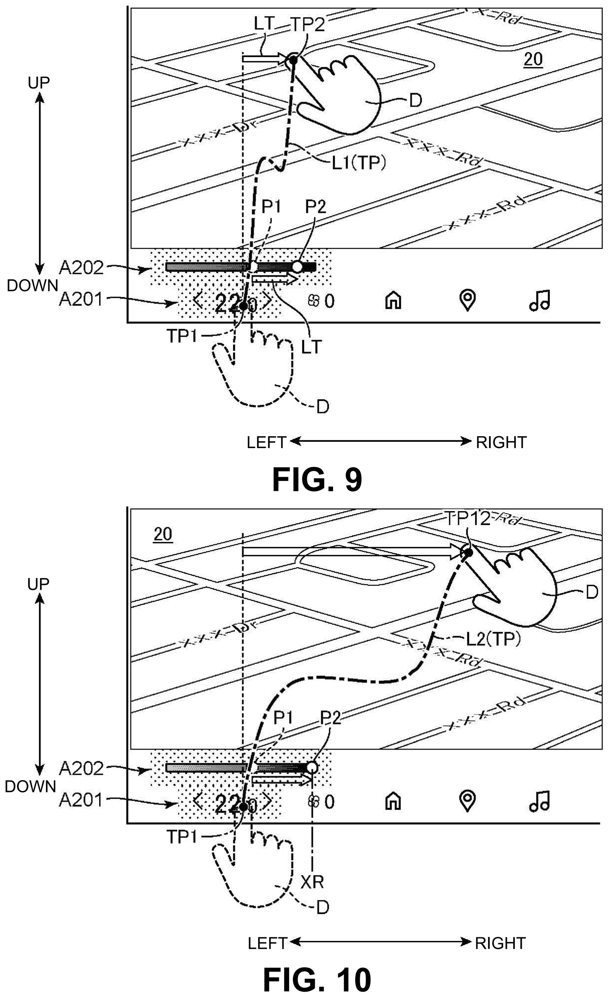

FIG. 9 is a diagram illustrating one example of the display screen 20 in a case where the bar sliding control is started and the swipe operation is performed. As illustrated in FIG. 9, for example, even when the position TP of the touch operation moves along a dot-dash line L1 from a first position TP1 in the operation accepting region A201 for the second air-conditioning temperature to a second position TP2 on the outside of the region A201 and the bar icon display region A202, the bar sliding control is continued until the touch operation is discontinued, and the position of the pointer F22 and the second air-conditioning temperature are changed based on the change amount of the operation position of the touch operation.

Further, in the bar sliding control, the position of the pointer F22 is changed by a moving amount of the position TP of the touch operation in the left-right direction. Thus, as an example in FIG. 9, even in a case where the position TP of the touch operation largely changes in the up-down direction, regardless of a change in this touch operation position in the up-down direction, the position of the pointer F22 is changed only by a separation distance LT in the left-right direction between the first position TP1 and the second position TP2. Specifically, in the example in FIG. 9, accompanying the swipe operation which is performed rightward, the position of the pointer F22 moves to a position P2 which is spaced apart in the right direction, by the above separation distance LT, from a position P1 at a time before the bar sliding control is started.

FIG. 10 is a diagram illustrating another example of the display screen 20 in a case where the bar sliding control is started. In FIG. 10, the swipe operation along a dot-dash line L2 is performed, and the position TP of the touch operation moves to the right side relative to the position XR of the right end of the bar F21. As described above, in the bar sliding control, in a case where the position TP of the touch operation moves to the right side relative to the position XR of the right end of the bar F21, the position of the pointer F22 is set to the right end portion of the bar F21, and in a case where the position TP of the touch operation moves to the left side relative to the position XL of the left end of the bar F21, the position of the pointer F22 is set to the left end portion of the bar F21. Accordingly, in an example in FIG. 10, the pointer F22 moves to a position P2 of the right end portion of the bar F21.

Note that control that the control unit 100 carries out when the first air-conditioning temperature icon F1 is operated will have contents in which the "second air-conditioning temperature" is replaced by the "first air-conditioning temperature" in the description about the above-described control in a case where the second air-conditioning temperature icon F2 is operated. Note that an operation accepting region for the first air-conditioning temperature, which is displayed accompanying an operation on the first air-conditioning temperature icon F1, is set in the vicinity of a display region of the first air-conditioning temperature icon F1, and a bar icon display region for the first air-conditioning temperature is set above the operation accepting region for the first air-conditioning temperature.

### (Control in Operation of Air-Conditioning Airflow amount Icon)

Next, a description will be made about control which is carried out by the control unit 100 when the air-conditioning airflow amount icon F3 is operated. Control in an operation of the air-conditioning airflow amount icon F3 is roughly the same as that in an operation of the second air-conditioning temperature icon F2, and in the following, a description will simply be made.

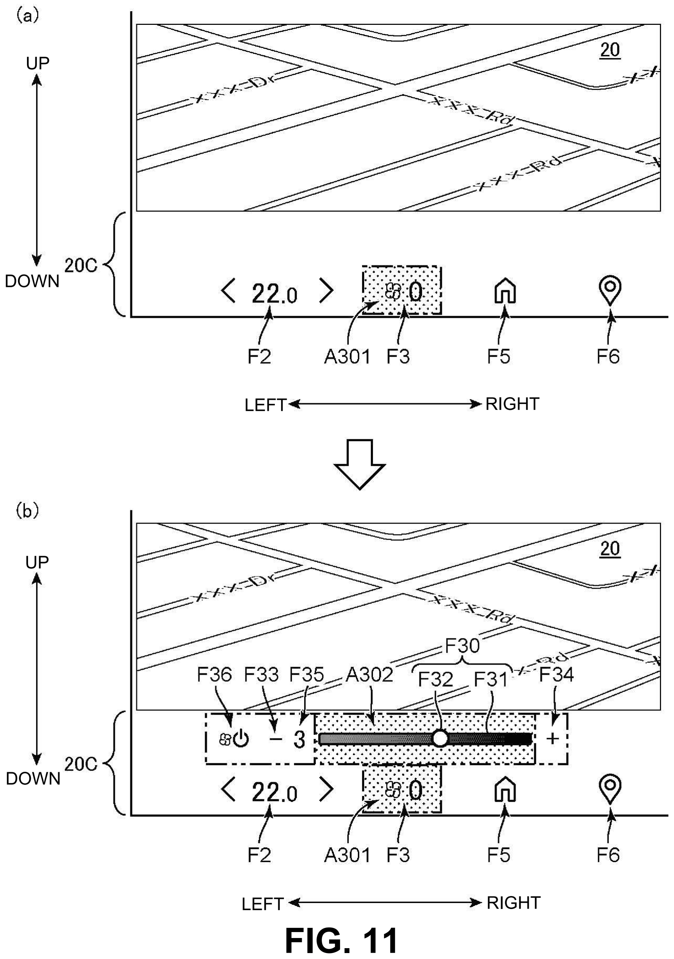

FIG. 11(a) and FIG. 11(b) are diagrams which respectively correspond to FIG. 7 and FIG. 8. Similarly to the second air-conditioning temperature icon F2, when the touch operation is continuously performed, for the determination time or longer, on an operation accepting region A301 for the air-conditioning airflow amount which is set in the vicinity of a display region of the air-conditioning airflow amount icon F3, the control unit 100 displays a bar icon F30 for the air-conditioning airflow amount, which includes a bar F31 and a pointer F32 moving along the bar F31, in a bar icon display region A302 for the air-conditioning airflow amount.

In the present embodiment, similarly to the operation accepting region A201 for the second air-conditioning temperature, a region which is wider, to each of left and right outer sides and by almost the same dimension as the dimension 0.5 times the index finger of an adult male American person (AM50) of the standard body shape, than a region in which the air-conditioning airflow amount icon F3 functions as the operation element (a region in which the touch operation or the like is accepted as an operation performed for the air-conditioning airflow amount icon F3) is set as the operation accepting region A301 for the air-conditioning airflow amount. In detail, the air-conditioning airflow amount icon F3 includes two icons (symbols) of an icon formed with a picture of a fan and an icon formed with a numeral representing a level of the air-conditioning airflow amount, and the region in which the air-conditioning airflow amount icon F3 functions as the operation element corresponds to a dimension of two index fingers of the above adult male person. On the other hand, the operation accepting region A301 for the air-conditioning airflow amount is set as a region from a position on the right side, by the dimension 0.5 times the above index finger, relative to the region in which the air-conditioning airflow amount icon F3 functions as the operation element to a position on the left side, by the dimension 0.5 times the above index finger, relative to the region in which the air-conditioning airflow amount icon F3 functions as the operation element. Note that in illustration examples, the operation accepting region A301 is set to a region from an intermediate position between the left end of the air-conditioning airflow amount icon F3 and the right end of the second air-conditioning temperature icon F2 to an intermediate position between a right end of the air-conditioning airflow amount icon F3 and a left end of the home icon F5. In the up-down direction, the operation accepting region A201 for the second air-conditioning temperature and the operation accepting region A301 for the air-conditioning airflow amount are set in the same position.

Similarly to the bar icon display region A202 for the second air-conditioning temperature, the bar icon display region A302 for the air-conditioning airflow amount is set in the third display region 20C. Further, the same as a relationship between the operation accepting region A201 for the second air-conditioning temperature icon F2 and the bar icon display region A202, the bar icon display region A302 for the air-conditioning airflow amount is set in a region which is above the operation accepting region A301 for the air-conditioning airflow amount icon F3 and does not overlap that. Further, a shape and dimensions of the bar icon F30 for the air-conditioning airflow amount icon F3 are the same as those of the bar icon F20 for the second air-conditioning temperature.

On the other hand, differently from a case where the second air-conditioning temperature icon F2 is operated, in a case where the air-conditioning airflow amount icon F3 is operated, an increase icon F34 is displayed on the right side relative to the bar icon F30, and a decrease icon F33, a numeral F35, and a switching icon F36 are displayed on the left side relative to the bar icon F30. The increase icon F34 is an icon which functions as the operation element for increasing the air-conditioning airflow amount by each unit airflow amount. The decrease icon F33 is an icon which functions as the operation element for decreasing the air-conditioning airflow amount by each unit airflow amount. The numeral F35 is a numeral which corresponds to a set value of the air-conditioning airflow amount. The switching icon F36 is an icon which functions as the operation element for switching a flow of the air-conditioning air into the vehicle cabin R and a stop.

Further, except the above process in a case where the determination in step S2 is NO and the above carrying-out timing of step S201, control that the control unit 100 carries out when the air-conditioning airflow amount icon F3 is operated will become control in which in the flowcharts in FIG. 4 to FIG. 6 and the above description using those, "the operation accepting region for the second air-conditioning temperature", "the bar icon display region for the second air-conditioning temperature", and "the bar icon for the second air-conditioning temperature" are respectively replaced by "the operation accepting region for the air-conditioning airflow amount", "the bar icon display region for the air-conditioning airflow amount", and "the bar icon for the air-conditioning airflow amount", the "bar" and "pointer" of the bar icon for the second air-conditioning temperature are respectively replaced by the "bar" and "pointer" for the air-conditioning airflow amount, and the "temperature raising icon", "temperature lowering icon", and "unit temperature" are respectively replaced by the "increase icon", "decrease icon", and "unit airflow amount". Note that when the air-conditioning airflow amount icon F3 is operated, step S201 is carried out in a case where the determination in not step S2 but step S11 becomes NO, and the control unit 100 progresses to not step S201 but step S7 in a case where the determination in step S2 is NO. Further, when the air-conditioning airflow amount icon F3 is operated, in a case where the determination in step S201 is NO, it is determined whether or not the switching icon F36 is operated. When this determination is YES, the flow of the air-conditioning air into the vehicle cabin R and the stop are switched, and in a case where the determination is NO, the control unit 100 progresses to step S7. Further, in step S15 to which the control unit 100 progresses when the air-conditioning airflow amount icon F3 is operated, display of the increase icon F34, the decrease icon F33, the numeral F35 representing the level of the air-conditioning airflow amount, and the switching icon F36, together with the bar icon F30, are canceled.

By carrying out the above control, similarly to a case where the second air-conditioning temperature icon F2 is operated, when the touch operation is continuously performed, for the determination time or longer, on the operation accepting region A301 for the air-conditioning airflow amount, the bar icon F30 is displayed on the display 10. Then, when consecutively to the above touch operation, the swipe operation with a point in the operation accepting region A301 for the air-conditioning airflow amount being used as a base point is performed, the bar sliding control is started, a position of the pointer F32 is changed on the bar F31 accompanying movement of the operation position in the left-right direction, and the air-conditioning airflow amount is changed in accordance with the position of the pointer F32. Further, in a state where the bar icon F30 is displayed on the display 10, even when the user once detaches the finger from the display 10, when the swipe operation with the bar icon display region A302 for the air-conditioning airflow amount being used as a base point is performed, the bar sliding control is started. Further, after the bar sliding control is started, even when the operation position of the swipe operation comes off from the operation accepting region A301 and the bar icon display region A302 for the air-conditioning airflow amount, the bar sliding control is continued, and the position of the pointer F32 and the air-conditioning airflow amount are changed in accordance with the moving amount of the operation position.

### (Control in Operation of Sound Volume Icon)

Next, a description will be made about control which is carried out by the control unit 100 when the sound volume icon F4 is operated. Control in an operation of the sound volume icon F4 is roughly the same as that of the second air-conditioning temperature icon F2, and in the following, a description will simply be made.

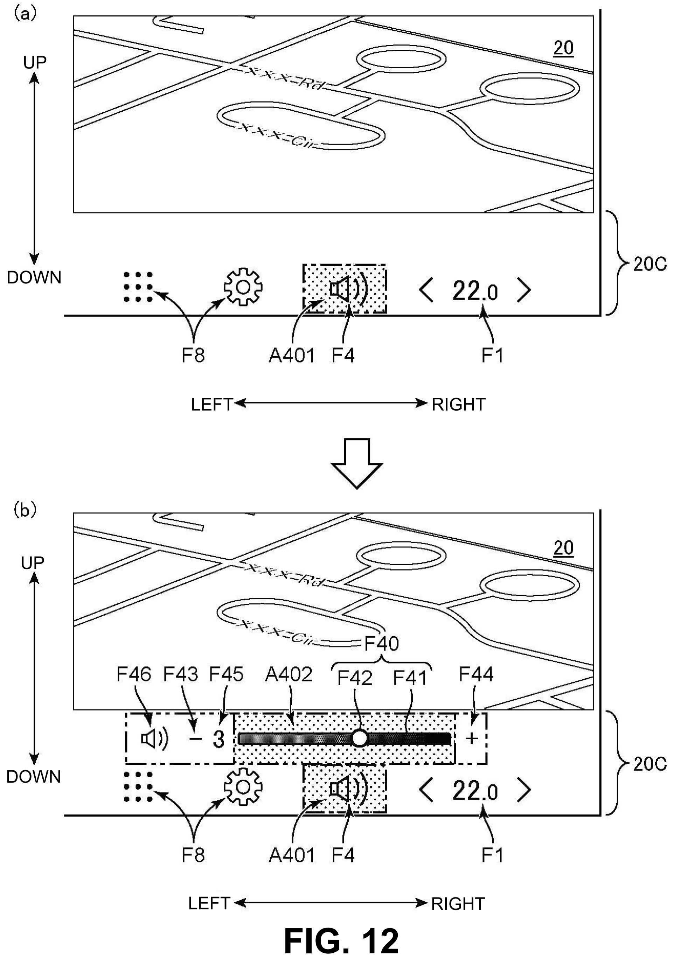

FIG. 12(a) and FIG. 12(b) are diagrams which respectively correspond to FIG. 7 and FIG. 8. Similarly to the second air-conditioning temperature icon F2, when the touch operation is continuously performed, for the determination time or longer, on an operation accepting region A401 for the speaker sound volume which is set in the vicinity of a display region of the sound volume icon F4, the control unit 100 displays a bar icon F40 for the speaker sound volume, which includes a bar F41 and the pointer F42 moving along the bar F41, in a bar icon display region A402 for the speaker sound volume.

In the present embodiment, similarly to the operation accepting region A201 for the second air-conditioning temperature, a region which is wider, to each of left and right outer sides and by almost the same dimension as the dimension 0.5 times the index finger of an adult male American person (AM50) of the standard body shape, than a region in which the sound volume icon F4 functions as the operation element (a region in which the touch operation or the like is accepted as an operation performed for the sound volume icon F4) is set as the operation accepting region A401 for the speaker sound volume. In detail, the sound volume icon F4 is configured with one icon (symbol), and the region in which the sound volume icon F4 functions as the operation element corresponds to the dimension of one index finger of the above adult male person. On the other hand, the operation accepting region A401 for the speaker sound volume is set as a region from a position on the right side, by the dimension 0.5 times the above index finger, relative to the region in which the sound volume icon F4 functions as the operation element to a position on the left side, by the dimension 0.5 times the above index finger, relative to the region in which the sound volume icon F4 functions as the operation element. Note that in illustration examples, in the left-right direction, the operation accepting region A401 for the speaker sound volume is set to a region from an intermediate position between a left end of the sound volume icon F4 and a right end of the setting icons F8 to an intermediate position between a right end of the sound volume icon F4 and a left end of the first air-conditioning temperature icon F1. In the up-down direction, the operation accepting region A201 for the second air-conditioning temperature and the operation accepting region A301 for the speaker sound volume are set in the same position.

Similarly to the bar icon display region A202 for the second air-conditioning temperature, the bar icon display region A402 for the speaker sound volume is set in the third display region 20C. Further, the same as the relationship between the operation accepting region A201 for the second air-conditioning temperature icon F2 and the bar icon display region A202, the bar icon display region A402 for the speaker sound volume is set in a region which is above the operation accepting region A401 for the speaker sound volume and does not overlap that. Further, a shape and dimensions of the bar icon F40 for the speaker sound volume are the same as those of the bar icon F20 for the second air-conditioning temperature.

On the other hand, differently from a case where the second air-conditioning temperature icon F2 is operated, in a case where the sound volume icon F4 is operated, an increase icon F44 is displayed on the right side relative to the bar icon F40, and a decrease icon F43, a numeral F45, and a switching icon F46 are displayed on the left side relative to the bar icon F40. The increase icon F44 is an icon which functions as the operation element for increasing the speaker sound volume by each unit level. The decrease icon F43 is an icon which functions as the operation element for decreasing the speaker sound volume by each unit level. The numeral F45 is a numeral which corresponds to a set value of the speaker sound volume. The switching icon F46 is an icon which functions as the operation element for switching an output of a sound from the speakers and a stop.

Further, except the above process in a case where the determination in step S2 is NO and the above carrying-out timing of step S201, control that the control unit 100 carries out when the sound volume icon F4 is operated will become control in which in the flowcharts in FIG. 4 to FIG. 6 and the above description using those, "the operation accepting region for the second air-conditioning temperature", "the bar icon display region for the second air-conditioning temperature", and "the bar icon for the second air-conditioning temperature" are respectively replaced by "the operation accepting region for the speaker sound volume", "the bar icon display region for the speaker sound volume", and "the bar icon for the speaker sound volume", the "bar" and "pointer" are respectively replaced by the "bar" and "pointer" of the bar icon for the speaker sound volume, and the "temperature raising icon", "temperature lowering icon", and "unit temperature" are respectively replaced by the "increase icon", "decrease icon", and "unit level". Note that when the sound volume icon F4 is operated, step S201 is carried out in a case where the determination in not step S2 but step S11 becomes NO, and the control unit 100 progresses to not step S201 but step S7 in a case where the determination in step S2 is NO. Further, when the sound volume icon F4 is operated, in a case where the determination in step S201 is NO, it is determined whether or not the switching icon F46 is operated. When this determination is YES, the output of the sound from the speakers and the stop are switched, and in a case where the determination is NO, the control unit 100 progresses to step S7. Further, in step S15 to which the control unit 100 progresses when the sound volume icon F4 is operated, display of the increase icon F44, the decrease icon F43, the numeral F45 representing the level of the speaker sound volume, and the switching icon F46, together with the bar icon F40, are canceled.

By carrying out the above control, similarly to the second air-conditioning temperature icon F2, when the touch operation is continuously performed, for the determination time or longer, on the operation accepting region A401 for the speaker sound volume, the bar icon F40 is displayed on the display 10. Then, when consecutively to the above touch operation, the swipe operation with a point in the operation accepting region A401 for the speaker sound volume being used as a base point is performed, the bar sliding control is started, a position of the pointer F42 is changed on the bar F41 accompanying movement of the operation position in the left-right direction, and the sound volume is changed in accordance with the position of the pointer F42. Further, in a state where the bar icon F40 is displayed on the display 10, even when the user once detaches the finger from the display 10, when the swipe operation with a point in the bar icon display region A402 for the speaker sound volume being used as a base point is performed, the bar sliding control is started. Further, after the bar sliding control is started, even when the operation position of the swipe operation comes off from the operation accepting region A401 and bar icon display region A402 for the speaker sound volume, the bar sliding control is continued, and the position of the pointer F42 and the speaker sound volume are changed in accordance with the moving amount of the operation position.

### (Working and So Forth)

As described above, in the vehicle display device 1 according to the above embodiment, after the bar sliding control is started, even when the operation position of the touch operation comes off from the operation accepting region A201 (A301 or A401) and the bar icon display region A202 (A302 or A402), the bar sliding control is continued, and the position of the pointer F22 (F32 or F42) and a value of the control parameter (the air-conditioning temperature, the air-conditioning airflow amount, or the speaker sound volume) are changed in accordance with the moving amount of the operation position in the left-right direction. For example, accompanying vibration or the like of the vehicle V, even when against an intention of the user, the operation position of the touch operation by the user comes off from the operation accepting region A201 (A301 or A401) or the bar icon display region A202 (A302 or A402), the control parameter is changed.

Thus, the user does not have to perform an operation in a limited range such as the operation accepting region A201 (A301 or A401) or the bar icon display region A202 (A302 or A402) in order to change the value of the control parameter, and operability becomes good. In other words, those regions A201 (A301 and A401) and A202 (A302 and A402) do not have to be enlarged in order to make operability good. Consequently, in the above vehicle display device 1, the operation accepting region A201 (A301 or A401) or the bar icon display region A202 (A302 or A402) is reduced to a small size, a display region of other information such as a map is thereby secured, and while convenience is enhanced by display of this information, operability of a changing operation of the control parameter can be made good.

Further, in the vehicle display device 1 according to the above embodiment, before the bar sliding control is started, the bar icon F20 (F30 or F40) is displayed. Thus, the user can be caused to recognize that the bar sliding control is started and the pointer F22 (F32 or F42) can be moved along the bar F21 (F31 or F41) by the swipe operation. Consequently, the user can be encouraged to perform an operation in a wider range than the above region A201 (A301 or A401) or A202 (A302 or A402), and good operability can certainly be provided. Further, the user can be caused to recognize that an operation of another icon or the like becomes ineffective, the other icon or the like being present in a position deviated from the operation accepting region A201 (A301 or A401) or the bar icon display region A202 (A302 or A402), and the user can be prevented from performing an incorrect operation on the icon.

In particular, in the above embodiment, the bar icon F20 (F30 or F40), which is an icon including the pointer F22 (F32 or F42) that the user is about to operate, is displayed, and a start of the bar sliding control is thereby notified to the user. Thus, the user can be caused to intuitively recognize that the bar sliding control is started and the pointer F22 (F32 or F42) can be moved by the swipe operation.

Further, in the vehicle display device 1 according to the above embodiment, the bar icon display region A202 (A302 or A402) is set in a region which does not overlap the operation accepting region A201 (A301 or A401), and after the bar icon F20 is displayed, the function icons F1 to F8 are continuously displayed in the operation accepting region A201 (A301 or A401). Thus, the user can be caused to recognize the kind of the control parameter that the user himself/herself operates, and convenience is improved.

Further, in the vehicle display device 1 according to the above embodiment, when a condition is satisfied that consecutively to the touch operation for displaying the operation accepting region A201 (A301 or A401), which is performed in the operation accepting region A201 (A301 or A401), the swipe operation is performed, the bar sliding control is started. Thus, the user can change the position of the pointer F22 (F32 or F42) and the control parameter by a simple operation in which the swipe operation is just performed by the finger or the like brought into contact with the operation accepting region A201 (A301 or A401).

Further, in the vehicle display device 1 according to the above embodiment, even in a case where the touch operation for displaying the operation accepting region A201 (A301 or A401) and the swipe operation at a time after display of the bar icon F20 (F30 or F40) are not consecutively performed, when a condition is satisfied that the swipe operation with the point in the bar icon display region A202 (A302 or A402) being used as the base point is performed after display of the bar icon F20 (F30 or D40), the bar sliding control is started.

Thus, even in a case where the user detaches the finger or the like from the operation accepting region A201 (A301 or A401) immediately after display of the bar icon F20 (F30 or F40), the user does not have to again perform the touch operation on the operation accepting region A201 (301 or A401) in order to start the bar sliding control. Thus, convenience is improved.

Further, in the vehicle display device 1 according to the above embodiment, the moving amount of the pointer F22 (F32 or F42) is decided based only on the change amount of the operation position of the swipe operation in the left-right direction.

Thus, as described above, even in a case where the operation position is deviated in the up-down direction, which is not intended by the user, accompanying vibration or the like of the vehicle V, a situation can be avoided where this deviation influences the moving amount of the pointer F22 (F32 or F42). Consequently, the position of the pointer F22 (F32 or F42) and further the control parameter can more certainly be changed in accordance with an intention of the user.

In particular, in the vehicle display device 1 according to the above embodiment, the longitudinal direction of the bar F21 (F31 or F41) is left and right, which coincides with the direction reflected in the determination of the travel of the pointer F22 (F32 or F42). Thus, the user can easily recognize the direction to be reflected in decision of the moving amount of the pointer F22 and can intuitively perform the swipe operation for moving the pointer F22.

Further, in the vehicle display device 1 according to the above embodiment, the pointer F22 (F32 or F42) is configured to move only in a range between both of the left and right ends of the bar F21 (F31 or F41), and even in a case where the swipe operation for moving the pointer F22 is carried out, the swipe operation is made ineffective which is carried out in a state where the pointer F22 (F32 or F42) reaches one end of the bar F21 (F31 or F41) in the left-right direction. Thus, the pointer F22 (F32 or F42) can more appropriately be displayed on the bar F21 (F31 or F41).

Further, in the vehicle display device 1 according to the above embodiment, the air-conditioning apparatus 60 and the acoustic apparatus 70 are set as carrying-out target apparatuses of the bar sliding control, and as the control parameters, the air-conditioning airflow amount, the air-conditioning temperature, and the speaker sound volume are set. Thus, while an area for displaying information other than information about the air-conditioning airflow amount, the air-conditioning temperature, and the speaker sound volume is secured, operability for the air-conditioning airflow amount and the air-conditioning temperature can be made good.

Further, in the vehicle display device 1 according to the above embodiment, a size of the operation accepting region A201 (A301 or A401) in the left-right direction is set as the region which is wider, to each of left and right outer sides and by almost the same dimension as the dimension 0.5 times the index finger of an adult male American person (AM50) of the standard body shape, than the region in which the corresponding icon F2 (F3 or F4) functions as the operation element. Thus, even in a case where the finger or the like of the user is deviated from the position of the corresponding icon F2 (F3 or F4) accompanying vibration or the like of the vehicle V, the bar icon F20 (F30 or F40) can be displayed, and the bar sliding control can be started.

### (Modification Examples)

In the above embodiment, a description is made about a case where the carrying-out target apparatuses of the bar sliding control are the air-conditioning apparatus 60 and the acoustic apparatus 70; however, the carrying-out target apparatus of the bar sliding control is not limited to those and may be one of the air-conditioning apparatus 60 and the acoustic apparatus 70 or another apparatus. Further, the control parameters may be one or two of the air-conditioning airflow amount, the air-conditioning temperature, and the speaker sound volume or other parameters.

In the above embodiment, a description is made about a case where the bar icon display region A202 (A302 or A402) is set above the operation accepting region A201 (A301 or A401); however, a position relationship between those regions is not limited to this. Further, the bar icon display region A202 (A302 or A402) may be set in a region which overlaps the operation accepting region A201 (A301 or A401).

In the above embodiment, a description is made about a case where the function icons F1 to F8 are displayed in the third display region 20C of the display screen 20; however, display positions of the function icons F1 to F8 are not limited to this and may be in the first display region 20A or the second display region 20B. Further, in the above embodiment, a description is made about a case where the operation accepting region A201 (A301 or A401) is set in the vicinity of the display region of the corresponding function icon F2 (F3 or F4); however, a position of the operation accepting region A201 (A301 or A401) is not limited to this. Note that in a case where the operation accepting region A201 (A301 or A401) is set in the vicinity of the display region of the corresponding function icon F2 (F3 or F4) and where the function icons F1 to F8 are displayed in the first display region 20A or the second display region 20B, the operation accepting region A201 (A301 or A401) is also displayed in the first display region 20A or the second display region 20B.

Further, in the above embodiment, a description is made about a case where the size of the operation accepting region A201 (A301 or A401) is set based on the dimension of the index finger of an adult male American person of the standard body shape; however, a setting reference and a specific size of the operation accepting region A201 (A301 or A302) are not limited to this.

In the above embodiment, a description is made about a case where the bar F21 (F31 or F41) exhibits a shape extending in the left-right direction and the pointer F22 (F32 or F42) moves in the left-right direction; however, the longitudinal direction of the bar F21 (F31 or F41) and a moving direction of the pointer F22 (F32 or F42) are not limited to those. For example, those directions may be set to the up-down direction.

In the above embodiment, a description is made about a case where the bar icon F20 (F30 or F40) is displayed and a start of the bar sliding control is thereby notified to the user; however, a specific configuration for notifying a start of the bar sliding control to the user is not limited to this. For example, by transmitting vibration to the user or producing a sound, the above notification may be performed to the user.

Further, in the above embodiment, a description is made about a case where the bar icon F20 (F30 or F40) is displayed in a case where the duration time of the touch operation performed on the operation accepting region A201 (A301 or A401) is equal to or longer than the determination time; however, a condition for display of the bar icon F20 (F30 or F40) is not limited to this. For example, the above condition may be a condition that the long press operation is performed.

In the above embodiment, a description is made about a case where the pointer F22 (F32 or F42) moves on the bar F21 (F31 or F41); however, it is sufficient that display is performed such that the pointer F22 moves along the bar F21 (F31 or F41), and those may be spaced apart from each other.

### [Reference Signs List]

- 1: vehicle display device
- 10: display (display unit)
- 60: air-conditioning apparatus
- 70: acoustic apparatus
- 100: control unit
- 102: display control unit
- 104: apparatus control unit
- A201: operation accepting region
- A202: bar icon display region
- F2: function icon (main icon)
- F20: bar icon
- F21: bar
- F22: pointer
- V: vehicle

## Claims

1. A vehicle display device (1) being provided in a vehicle (V), the vehicle display device (1) comprising:
a display unit (10) that is capable of accepting a touch operation by a user;
a display control unit (102) that displays a bar icon (F20, F30, F40), which includes a bar (F21, F31, F41) for representing a magnitude of a predetermined control parameter of a vehicle-mounted apparatus (60, 70) and a pointer (F22, F32, F42) moving along the bar, in a predetermined bar icon display region (A202, A302, A402) of the display unit (10);
an apparatus control unit (104) that sets the magnitude of the control parameter based on a position of the pointer (F22, F32, F42) with respect to the bar (F21, F31, F41); and
a notification unit (102) that executes notification control to notify, to the user, that a touch operation is accepted when the touch operation is performed on a predetermined operation accepting region (A201, A301, A401) of the display unit (10), **characterized in that**
when a swipe operation to slidingly move an operation position (TP) of the touch operation is performed after the notification control is carried out, the display control unit (102) carries out pointer moving control in which regardless of whether or not an operation position (TP) of the swipe operation is in the bar icon display region (A201, A301, A401), the pointer (F22, F32, F42) is moved in accordance with a change in the operation position (TP).

2. The vehicle display device (1) according to claim 1, **characterized in that**
the display control unit (102) functions as the notification unit (102) and carries out the notification control to notify, to the user, that a touch operation is performed, by displaying the bar icon (F20, F30, F40) in the bar icon display region (A202, A302, A402), when the touch operation is performed on the operation accepting region (A201, A301, A401).

3. The vehicle display device (1) according to claim 1 or 2, **characterized in that**
the display control unit (102) displays a main icon (F1, F2, F3, F4), which represents a kind of the control parameter, in the operation accepting region (A201, A301, A401), and
the bar icon display region (A202, A302, A402) is set in a region which does not overlap the operation accepting region (A201, A301, A401).

4. The vehicle display device (1) according to any of the preceding claims, **characterized in that**
the display control unit (102) carries out the pointer moving control when a condition is satisfied that a touch operation in the operation accepting region (A201, A301, A401) and a swipe operation at a time after the notification control is carried out are consecutively performed.

5. The vehicle display device (1) according to claim 4, **characterized in that**
the display control unit (102) carries out the pointer moving control when a condition is satisfied that the touch operation in the operation accepting region (A201, A301, A401) and the swipe operation at a time after the notification control is carried out are not consecutively performed and a swipe operation with a position in the bar icon display region (A202, A302, A402) being used as a base point is performed after the notification control is carried out.

6. The vehicle display device (1) according to any of the preceding claims, **characterized in that**
when the pointer moving control is carried out, the display control unit (102) decides a moving amount of the pointer (F22, F32, F42) based only on a change amount of the operation position (TP) of the swipe operation in a predetermined operation effective direction.

7. The vehicle display device (1) according to claim 6, **characterized in that**
the bar (F21, F31, F41) exhibits a shape extending along the predetermined operation effective direction, and
the display control unit (102) moves the pointer (F22, F32, F42) along the predetermined operation effective direction.

8. The vehicle display device (1) according to any of the preceding claims, **characterized in that**
the bar (F21, F31, F41) exhibits a shape extending in a predetermined direction, and
when the pointer moving control is carried out, the display control unit (102) makes ineffective the swipe operation for moving the pointer (F22, F32, F42) to one side, the swipe operation being carried out in a state where the pointer (F22, F32, F42) reaches an end portion (XL, XR)on the one side in a longitudinal direction of the bar (F21, F31, F41).

9. The vehicle display device (1) according to any of the preceding claims, **characterized in that**
the vehicle-mounted apparatus is an air-conditioning apparatus (60), and
the control parameter is at least one of a flow amount and a temperature of a wind to be supplied into a vehicle cabin (R) by the air-conditioning apparatus (60).

10. The vehicle display device (1) according to any of the preceding claims, **characterized in that**
the vehicle-mounted apparatus is an acoustic apparatus (70), and
the control parameter is a sound volume of a sound to be produced by the acoustic apparatus (70).

11. The vehicle display device (1) according to any of the preceding claims, **characterized in that**
the notification control is carried out when a duration time of the touch operation performed on the operation accepting region (A201, A301, A401) is equal to or longer than a predetermined determination time.

12. The vehicle display device (1) according to claim 6 or 7, **characterized in that**
the predetermined operation effective direction is a left-right direction of the display unit (10).

13. The vehicle display device (1) according to claim 2, **characterized in that**
the display control unit (102) cancels the display of the bar icon (F20, F30, F40) when a period in which no touch operation is performed on the bar icon display region (A202, A302, A402) is equal to or longer than a predetermined finish determination period.

14. The vehicle display device (1) according to claim 1, **characterized in that**
the notification unit (102) executes the notification control by producing a sound or by transmitting vibration to the user.

15. A vehicle (V) including a vehicle display device (1) according to any of claims 1 to 14 and at least one vehicle-mounted apparatus (60, 70) to be controlled via the vehicle display device.
